# EUROPEAN PATENT APPLICATION

(11) **EP 0 598 952 A1**
(43) Date of publication of application: **01.06.1994**
(21) Application number: 92310626.4
(22) Date of filing: 20.11.1992
(51) Int. Cl.: B67D 5/34, F16K 31/22

(54) **Overfill protector**

(71) Applicant: MUOVISERRES OY, SF-61850 Kauhajoki as (FI)
(72) Inventor: Rajamaki, Veikko, SF-61800 Kauhajoki (FI)
(74) Representative: Clifford, Frederick Alan

(57) **Abstract**

The invention pertains to an overfill protector for a receiver to be filled by means of a suction apparatus, said overfill protector comprising a sealing plate (5) in or in association with a cover (2) of the receiver (1), said sealing plate covering a connection (3) of a source of suction and being provided with at least one air opening (11); a casing (8) to be mounted to the underneath of the sealing plate, said casing (8) having its lower part provided with openings for air flow; and a float disposed within the casing (8), said float being adapted in its upper position to press against the sealing plate (5) and to close the air openings (11) comprised therein. For reliable operation, the float (6) is adjusted to encase part of the interior of the casing. Openings (9, 10) of two sizes are provided in the lower part of the casing (8), the smaller ones (9) in proximity to an edge outside the area defined by the float (6), and the larger opening (10) in the middle, at the area defined by the float (6), the smaller openings (9) being so small that when the surface (P) of the liquid rises to the level of the lower part of the casing (8), the liquid flows into the casing only through the opening (10) at the float (6) and thereby lifts the float (6) to its upper position, in which the float blocks the entrance of air into the connection (3) of the source of suction.

## Description

The present invention pertains to an overfill protector for a receiver to be filled by means of a suction apparatus or the like, said overfill protector comprising a sealing plate in or in association with a cover of the receiver, said sealing plate covering a connection of a source of suction and being provided with at least one air opening; a casing to be mounted to the underneath of the sealing plate, said casing defining part of the interior of the receiver as an essentially separate space and having its lower part provided with openings for air flow; and a float disposed within the casing, said float moving freely in the vertical direction within the casing and being adapted in its upper position to press against the sealing plate and to close the air openings comprised therein.

Such solutions are nowadays general, and they are used in different versions.

Common disadvantages shared by prior-art arrangements include e.g. the fact that the overfill protector does not close tightly but leaks air and thus will not stop a liquid flow into the receiver. Nor has the closure of prior-art overfill protectors been sufficiently tight against splashes and foam, but splashes and foam have often entered the piping too easily through the overfill protector. Another disadvantage of prior-art arrangements has been their large size and complicated structure, which has caused uncertainty in operation of the apparatus. The expensive materials of prior-art arrangements have also been one reason for high costs of manufacture.

The object of the invention is to provide an overfill protector eliminating the prior art drawbacks. This is achieved with the overfill protector of the invention, which is characterised in that the float is adjusted to encase part of the interior of the casing and that openings of two sizes are provided in the bottom surface of the casing, the smaller ones in proximity to an edge outside the float-defined area, and the larger, at least one opening in the middle, at the float-defined area, the smaller openings being so small that when the surface of the liquid rises to the level of the lower part of the casing, the liquid flows into the casing essentially only through the opening(s) at the float and thereby lifts the float to its upper position in which the float blocks the entrance of air into the connection of the source of suction.

The overfill protector of the invention has the primary advantage that the entrance of liquid into the suction apparatus or the piping between the suction apparatusj and the receiver is prevented extremely effectively. The overfill protector of the invention reliably stops the liquid flow into the receiver when the receiver has become full and, when the liquid foams, also prevents the foam from entering the suction apparatus and the piping. Another advantage of the overfill protector of the invention is that the overfill protector is not closed by a sudden air current for instance when a means connected with the inlet connection for the liquid is blocked or closed and the means is disconnected from said connection when the source of suction is switched on, whereby a great deal of air suddenly flows into the receiver and therethrough into the source of suction. Neither does splashing of the liquid in the receiver close the overfill protector of the invention before the receiver is full. A further advantage of the invention is that it can be manufactured so as to have very low costs of production or even be disposable, wherefore the invention is inexpensive to bring into use.

The present invention will be clarified in what follows by means of an advantageous embodiment illustrated in the accompanying drawing, wherein
Figure 1 schematically shows the overfill protector of the invention in association with a receiver in a situation in which liquid is sucked into the receiver and the receiver is not full; and
Figure 2 schematically shows the arrangement of Figure 1 in a situation in which the receiver is full.

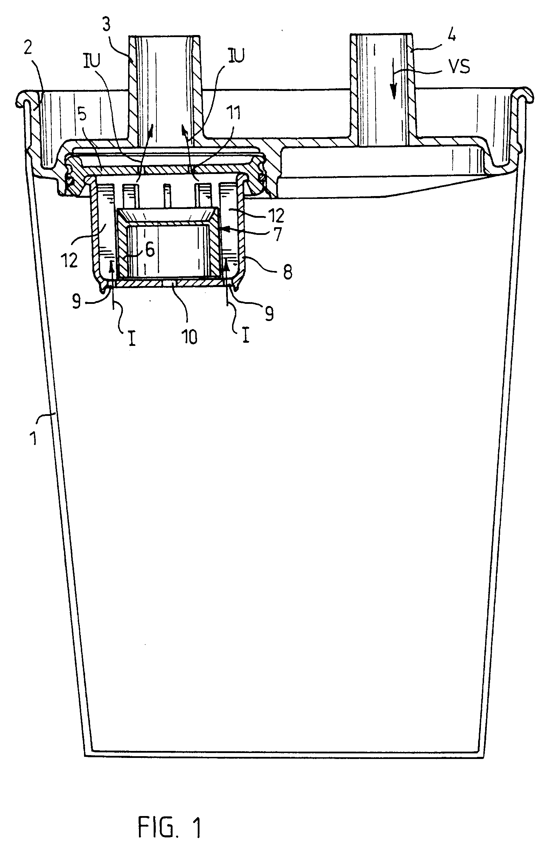

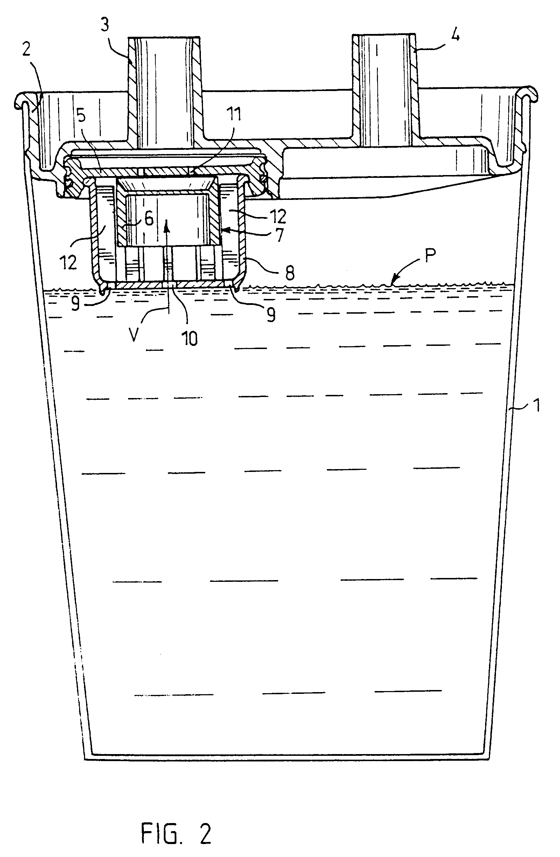

Figures 1 and 2 schematically show one preferred embodiment of the invention in conjunction with a receiver. Reference numeral 1 indicates a receiver and numeral 2 a cover of the receiver. Numeral 3 in the figures indicates a connection of a source of suction and numeral 4 an inlet connection for the liquid. The source of suction, the means for sucking the liquid, and the piping are not illustrated in the figures. Said apparatuses are quite conventional to a person skilled in the art, wherefore they will not be discussed in greater detail in this context.

Numeral 5 illustrates a sealing plate of the overfill protector, and numeral 6 a float of the overfill protector. Numeral 7 in the figures refers to a seal of the overfill protector, said seal being integral with the float in the embodiment of the figures. Numeral 8 in the figures shows a casing of the overfill protector.

The overfill protector, i.e. an arrangement consisting of the sealing plate 5, the float 6, the seal 7 and the casing 8, can be attached to the cover 2 of the receiver 1 e.g. by means of a suitable connector, or by embedding the arrangement suitably in the cover. The overfill protector may also be welded to the cover or be adapted to be integral with the cover. The cover 2 is disposed air-tightly on the receiver 1. The connection 3 of the source of suction is connected with the source of suction, and the inlet connection 4 for the liquid is connected in a corresponding manner with the means by which the liquid is led into the receiver 1. Liquid flow into the receiver 1 is illustrated in Figure 1 by arrow VS.

In accordance with the invention, the float 6 encases part of the interior of the casing 8. Openings 9 and 10 of two sizes are provided in the lower part of the casing 8, the smaller ones 9 in proximity to an edge of the lower part outside the area defined by the float 6, and the larger, at least one opening 10 in the middle, at the float-defined area. The smaller openings 9 are to be so small that when the surface of the liquid, which is shown by reference P in Figure 2, rises to the level of the lower part of the casing 8, the liquid flows into the casing essentially only through the opening(s) 10 at the float 6 and thereby lifts the float 6 to its upper position, in which the float blocks the passage of air into the connection 3 of the source of suction. Liquid flow through the opening 10 is illustrated by arrow V in Figure 2.

Air can flow from the receiver into the connection 3 of the source of suction through the smaller openings 9 of the casing and the openings 11 in the sealing plate 5 when the float is not pressed against the sealing plate 5. This situation is shown in Figure 1, in which air flow is illustrated by arrows I and IU.

The float 6 is adapted to move freely in the vertical direction within the casing 8. Movements of the float 6 are regulated by radial rails 12.

The overfill protector of the invention functions in principle in the following manner. When liquid is sucked into the receiver 1, air passes through the smaller openings 9 in the lower part of the casing 8 of the overfill protector into the casing, and flows further along a gap between the float 6 and the casing 8 upwards above the float and its associated seal 7, and further through the air openings 11 in the sealing plate 5 into the connection 3 of the source of suction, and further into the source of suction. The liquid flows through the inlet connection 4 into the receiver 1, as illustrated by Figure 1.

When the surface P of the liquid rises to the level of the lower part of the overfill protector casing 8, made from polyolefins, the air openings 9 are covered, whereby negative pressure increases in the space defined by the casing. The air openings in the outer edge of the lower part of the casing 8 are so small that, by the combined effect of the size of the openings and the material of the casing, liquid flow through said openings requires a force so powerful that the float rises and the liquid flows through the larger opening(s) 10 underneath the float into the casing, whereby the liquid lifts up the float. When the float 6 rises, it ends up in a position in which the seal 7 in association with the float presses against the sealing plate 5, whereby the passage of air via the openings 11 is blocked. This situation is illustrated in Figure 2. Blockage of the passage of air also stops the sucking of the liquid into the receiver. When the suction apparatus is switched on, negative pressure maintains the float in the upper position, whereby liquid cannot flow into the receiver 1.

When the liquid splashes in the receiver, drops may drift before the air openings 9 in the lower part of the casing 8. In the invention, however, the liquid cannot enter through the openings 9 substantially because of the cooperation of the small size of the openings 9 and the material of the casing. In this situation air passes through openings which are open. Increase in negative pressure within the casing 8 is caused only by blockage of several openings 9 by liquid drops, the easiest way for air to flow being the opening 10 beneath the float 6, through which opening the air begins to flow, thereby lifting up the float. When rising, the float presses against the sealing plate, and air flow to the source of suction is interrupted as described above in connection with the rise of the surface P of the liquid. As a result, liquid drops which have splashed into the air openings will not reach the suction apparatus, but air flow always stops before the liquid drops pass through the air openings 9.

Air flow may be restricted by the size and number of the air openings 11 in the sealing plate such that air shocks will not obstruct the overfill protector.

The overfill protector of the invention functions in the manner described above also when the liquid foams within the receiver.

The embodiment of the invention disclosed above is not intended to limit the invention in any way but the invention may be freely modified within the scope of the claims. It is thus clear that the overfill protector of the invention or its details need not necessarily be exactly as shown by the figures, other solutions being possible as well.

## Claims

1. An overfill protector for a receiver to be filled by means of a suction apparatus or the like, said overfill protector comprising a sealing plate (5) in or in association with a cover (2) of the receiver (1), said sealing plate covering a connection (3) of a source of suction and being provided with at least one air opening (11); a casing (8) to be mounted to the underneath of the sealing plate, said casing (8) defining part of the interior of the receiver as an essentially separate space and having its lower part provided with openings for air flow; and a float disposed within the casing (8), said float moving freely in the vertical direction within the casing and being adapted in its upper position to press against the sealing plate (5) and to close the air openings (11) comprised therein, **characterised** in that the float (6) is adjusted to encase part of the interior of the casing (8) and that openings (9, 10) of two sizes are provided in the lower part of the casing (8), the smaller ones (9) in proximity to an edge outside the area defined by the float (6), and the larger, at least one opening (10) in the middle, at the float-defined area, the smaller openings (9) being so small that when the surface (P) of the liquid rises to the level of the lower part of the casing (8), the liquid flows into the casing essentially only through the opening(s) (10) at the float (6) and thereby lifts the float (6) to its upper position in which the float blocks the entrance of air into the connection (3) of the source of suction.

2. An overfill protector according to claim 1, **characterised** in that in the upper edge of the float (6) is provided a seal (7) which, when pressing against the sealing plate, blocks the flow passage from the smaller air openings (9) of the casing (8) to the air openings (11) of the sealing plate (5).

3. An overfill protector according to claim 2, **characterised** in that the seal (7) is integral with the float (6).

4. An overfill protector according to any one of the preceding claims, **characterised** in that the casing (8) is made from polyolefins.

5. An overfill protector according to any one of the preceding claims 1 to 4, **characterised** in that the size and number of the air openings (11) of the sealing plate (5) is adjusted to restrict the air flow and thus prevent the overfill protector from being blocked by the air flow.

6. An overfill protector according to claim 5, **characterised** in that the air openings (11) of the sealing plate (5) are so small as to prevent the passage of liquid drops.
